# EUROPEAN PATENT APPLICATION

(11) **EP 2 863 579 A1**
(43) Date of publication of application: **22.04.2015**
(21) Application number: 13189292.9
(22) Date of filing: 18.10.2013
(51) Int. Cl.: H04L 12/24, H04L 29/08, G06F 9/44

(54) **Scheduling a device batch reconfiguration event in a network**

(71) Applicant: Koninklijke KPN N.V., 2516 CK The Hague (NL)
(72) Inventor: Veenstra, Pieter, 2518 HR The Hague (NL); Batsleer, Claudine, 9860 Oosterzele (BE)
(74) Representative: Wuyts, Koenraad Maria

(57) **Abstract**

The present invention provides a system (100) for scheduling a service event in a network. The system comprises a scheduling subsystem (120) for scheduling the service event by selecting devices (210-214) from a group, a monitoring subsystem (140) for identifying those devices which did not successfully register with a registration subsystem of the network, and an analysis subsystem (160) for determining selection criteria (162) for identifying further devices which are expected to fail registration based on said devices having failed registration. By providing the selection criteria (162) to the scheduling subsystem, the scheduling subsystem is enabled to adjust the scheduling based on the selection criteria, e.g., to avoid selecting the further devices in a further scheduling.

## Description

### FIELD OF THE INVENTION

The invention relates to a system and method for scheduling a service event in a network. The invention further relates to control software comprising instructions for execution on network equipment of the network, the instructions being operative for causing the network equipment to perform the steps of the abovementioned method. The invention further relates to the network comprising the abovementioned system.

### BACKGROUND OF THE INVENTION

Modern communication networks such as cellular networks or fixed-line networks serve a wide range of devices, including end-user devices such as mobile phones or tablets, 'smart' household devices such as connected fridges and autonomous devices such as embedded sensors. Such networks serve the devices by enabling communication to/from the devices. Such communication may include voice, video, messaging and other types of data. It is noted that such devices may also be referred to as client devices in that the devices connect to the network, i.e., are clients thereof, but are not part of the infrastructure of the network.

There may be a need to carry out a service event with respect to a group of devices of such a network. Here, the term 'service event' refers to an action which is performed within the network to service the devices. The service event may, but does need to be, associated with a network service or a network platform of the network. For example, a group of devices may need to be migrated from a source network platform to a target network platform. Another example is that a group of devices may need to be upgraded for continued use with the network itself. Yet another example is that a group of devices may need to be reconfigured to add access to a new network service, modifying access to an existing network service, adding a new feature to the device, remove an obsolete feature, etc.

In general, such a service event involves reconfiguring the devices of the group, e.g., to effect the migration or upgrade. For example, the devices of the group may be reconfigured by being provided with new server address data or with new software. The reconfiguration may be performed in an automated manner, e.g., using a reconfiguration subsystem, and may be deemed successful if a device is able to register with a registration subsystem of the network after being reconfigured. Here, the term 'registration subsystem' refers to a network entity which is tasked with handling the registration of devices.

It is known to schedule the service event by selecting devices from a group and providing scheduling data identifying said selected devices to the reconfiguration subsystem. In particular, the devices may be selected in batches from the group to carry out the service event in a batch-wise manner. For example, in case of a migration from a source network platform to a target network platform, batches of tens of thousands of devices may be selected each night for being migrated. Accordingly, the migration may be carried out in the course of several nights. Another example is the reconfiguration of a group of electricity meters which are connected to the network during a predetermined time frame.

The service event may be monitored, namely by determining whether the devices registered with the registration subsystem after being reconfigured. Accordingly, monitoring data may be generated which identifies those devices which did not successfully register with the registration subsystem. The monitoring data may be used to abort the service event for a batch of devices, e.g., if the number of devices which did not successfully register with the registration subsystem exceeds a predetermined threshold. Accordingly, in the course of the following day, network engineers may troubleshoot the service event, thereby determining, e.g., an alternative reconfiguration of the devices. The following night, the service event may be resumed by selecting devices again for being reconfig u red.

### SUMMARY OF THE INVENTION

The inventors have recognized that the known ways of carrying out a service event are insufficiently able to handle unexpected errors occurring during the service event.

It would be advantageous to obtain a system, method and/or control software which can better handle unexpected errors occurring during the service event.

The following aspects of the invention provide, amongst others, a monitoring subsystem for monitoring the registration of devices with a registration subsystem and an analysis subsystem for analyzing an output of the monitoring subsystem to identify devices which are expected to fail registration based on devices having been identified which have failed registration. By providing selection criteria identifying those devices which are expected to fail registration to a scheduling subsystem, the scheduling subsystem can take this information into account, e.g., to avoid scheduling said devices during the service event.

A first aspect of the invention provides a system for scheduling a service event in a network, the service event comprising reconfiguring a group of devices using a reconfiguration subsystem, said reconfiguring being deemed successful if a device is able to register with a registration subsystem of the network after being reconfigured, and the system comprising:
- a scheduling subsystem for scheduling the service event by selecting devices from the group and providing scheduling data identifying said selected devices to the reconfiguration subsystem;
- a monitoring subsystem for:
   - based on the scheduling data, determining whether the selected devices successfully registered with the registration subsystem, and
   - generating monitoring data identifying those devices of the selected devices which did not successfully register with the registration subsystem, thereby identifying a first set of devices having failed registration; and
- an analysis subsystem arranged for:
   - analyzing the monitoring data to obtain selection criteria for identifying a second set of devices which are expected to fail registration based on the first set of devices having failed registration; and
   - providing the selection criteria to the scheduling subsystem for enabling the scheduling subsystem to adjust the scheduling based on the selection criteria.

In a further aspect of the invention, a network is provided comprising the system as set forth.

In a further aspect of the invention, a method is provided for scheduling a service event in a network, the service event comprising reconfiguring a group of devices using a reconfiguration subsystem, said reconfiguring being deemed successful if a device is able to register with a registration subsystem of the network after being reconfigured, and the method comprising:
- scheduling the service event by selecting devices from the group and providing scheduling data identifying said selected devices to the reconfiguration subsystem;
- based on the scheduling data, determining whether the selected devices successfully registered with the registration subsystem;
- generating monitoring data identifying those devices of the selected devices which did not successfully register with the registration subsystem, thereby identifying a first set of devices having failed registration;
- analyzing the monitoring data to obtain selection criteria for identifying a second set of devices which are expected to fail registration based on the first set of devices having failed registration; and
- adjusting the scheduling of the service event based on the selection criteria.

In a further aspect of the invention, control software is provided comprising instructions for execution on network equipment of a network, the instructions being operative for causing the network equipment to perform the steps of the method as set forth.

The above measures may be carried out by network equipment comprised in or connected to the network. The network may be a telecommunication network of a network operator. The measures concern the scheduling of a service event in the network. The service event may involve a group of devices being reconfigured by a reconfiguration subsystem. The reconfiguration subsystem may, but may not need to be, part of the system, and may be arranged for reconfiguring the devices, e.g., by pushing data such as address data, user data or software to the devices. In doing so, a reconfiguration of a device is considered successful if, after being deemed to be reconfigured, the device is able to register with a registration subsystem of the network. Here, the registration subsystem may be one with which the device was previously able to register. The registration subsystem may also be another registration subsystem, e.g., associated with another network service or network platform, to which the device is only able to register if the device has been successfully reconfigured.

It is noted that the term 'registering' refers to those communication activities which occur between a device and a registration subsystem which constitute a prerequisite to the device making using of the network or one of its components. In the field of mobile telephony, such registration may be also referred to as subscriber registration.

A scheduling subsystem may be provided for scheduling the service event, namely by selecting devices from the group of devices and by providing scheduling data to the reconfiguration subsystem which identifies said selected devices. For example, the devices may be sequentially selected from the group, e.g., in batches or on an individual basis, for being reconfigured by the reconfiguration subsystem.

In addition to the scheduling subsystem, a monitoring subsystem may be provided for monitoring the service event, namely by determining whether respective ones of the selected devices registered with the registration subsystem after being deemed to be reconfigured by the reconfiguration subsystem. Having identified one or more devices, i.e., a first set of devices, which did not successfully register with the registration subsystem, the monitoring subsystem may generate monitoring data identifying said devices.

An analysis subsystem may be provided for analyzing the monitoring data of the monitoring subsystem. In particular, the analysis subsystem may analyze the monitoring data to derive selection criteria which identify further devices which are expected to fail registration in view of the first set of devices having failed registration. Effectively, the selection criteria may reflect a prediction of the analysis subsystem on which further devices are deemed to fail registration after being reconfigured given that a first set of devices has failed registration. The analysis subsystem may then provide the selection criteria to the scheduling subsystem, thereby enabling the scheduling subsystem to adjust the scheduling.

The above measures have the effect that a feedback loop may be established as part of carrying out the service event. In particular, the scheduling subsystem may be provided with data which identifies devices which are deemed to fail registration based on other, e.g., similar, devices having been identified as having failed registration after being reconfigured. As such, the scheduling subsystem may use this data to adjust the scheduling of the service event. If the devices having failed registration are considered as unexpected errors occurring during the service event, the scheduling subsystem may adjust the further scheduling of the service event to avoid further occurrence of such errors. The system may therefore effectively be self-learning in that it may learn which devices are likely or expected to fail registration during the service event and adjust the further scheduling accordingly.

A further advantage may be that it may not be needed to abort the service event. Rather, the service event may continue in adjusted form, e.g., using an adjusted schedule which firstly or only schedules those devices which are expected to succeed in the registration after being reconfigured. Yet another advantage may be that the service event may be completed quicker since, while the next day the network engineers may troubleshoot those devices which failed registration after being reconfigured, the reconfiguration of the remaining devices may have continued in the previous night. Yet a further advantage may be that fewer devices need to be reverted to their previous configuration since the reconfiguration of devices which would fail registration may be avoided. Yet a further advantage may be that fewer users are confronted with a non-functioning device in that it may be unable to register with the network or one of its components.

In an embodiment, the scheduling subsystem may be arranged for using the selection criteria to omit selecting the devices from the second set of devices. Accordingly, in further continuing the service event, the scheduling subsystem may rather select those devices are expected to succeed in registering with the registration subsystem after being reconfigured. In this respect, it is noted that in the above and following, the selection criteria for identifying a second set of devices which are expected to fail registration may directly identify said devices. Alternatively, the selection criteria may also directly identify devices which are expected to succeed registration, thereby enabling the scheduling subsystem to, if needed, determine which devices which are expected to fail registration, e.g., by inverting the selection criteria or by selecting a complementary group. It is noted that if the selection criteria directly identify devices which are expected to succeed registration, the selection subsystem may also use said selection criteria directly in adjusting the scheduling, e.g., by only selecting those devices which are expected to succeed registration.

In a further embodiment, the system may be arranged for accessing auxiliary data characterizing the devices of the group, and the analysis subsystem may be arranged for analyzing the auxiliary data in combination with the monitoring data to obtain the selection criteria. The inventors have recognized that devices which fail registration typically share certain characteristics. By using auxiliary data in the analysis which specifies one or more characteristics of the devices of the group, the analysis subsystem may identify the second set of devices based on those devices having the same or similar characteristics as those of the first set of devices. This may have the advantage that the second set of devices may be more accurately identified.

In a further embodiment, the analysis subsystem may be arranged for generating the selection criteria to identify the second set of devices based on one or more characteristics of the respective devices. The analysis subsystem may thus generate the selection criteria to identify the one or more characteristics of the devices which are the same or similar to those of the devices of the first set of devices.

In a further embodiment, the selection criteria may be based on at least one of the group of: a type of a device, a version of software running on the device, location information indicative of a location of the device, subscription information associated with the device, quality of service information associated with the device, and a type of connectivity of the device with the network. Devices which fail to register with the registration subsystem after being reconfigured may share characteristics such as being of a similar type, e.g., by belonging to a same device category, being of the same model, etc. Other characteristics may include a shared version of the software running on the devices, a shared location of the devices, a similarity in the subscription information associated with the devices, and a similarity in the type of connectivity of the devices with the network. The selection criteria may be generated based on said characteristics in that they identify the second set of devices based on the devices matching said characteristics. Accordingly, the second set of devices may be more accurately identified.

In a further embodiment, the analysis subsystem may be further arranged for:
- accumulating an error count for each of the one or more characteristics, the error count representing a number of devices which have failed registration and which exhibit the respective characteristic; and
- including one of the one or more characteristic in the selection criteria in response to the error count of said characteristic exceeding an error threshold.

A characteristic which has been matched to one or more devices of the first set of devices may be included in the selection criteria if a sufficient number of those devices share said characteristic. This may have the advantage that the second set of devices may be more reliably identified since the selection criteria may take into account the occurrence frequency of the characteristics in said devices.

In a further embodiment, the analysis subsystem may be arranged for obtaining the selection criteria by applying a statistical analysis technique to the auxiliary data in combination with the monitoring data. Statistical analysis techniques, such as those known per se from the fields of statistics and big data, are well suited for interpreting data such as the monitoring data and the auxiliary data. In particular, such statistical analysis techniques may be applied to detect shared characteristic amongst the devices of the first set of devices, thereby obtaining selection criteria for identifying said characteristics in the remaining devices of the group.

In a further embodiment, the scheduling subsystem may be arranged for scheduling the service event by selecting batches of devices from the group and providing scheduling data identifying the batches of devices to the reconfiguration subsystem. By selecting batches of devices, the scheduling subsystem may distribute the reconfiguring of the devices in time, namely by distributing the devices over different batches, whilst enabling the reconfiguration subsystem to reconfigure multiple devices in substantially parallel, namely those of a particular batch. This may have the advantage that the service event may be carried out more quickly, whilst still providing the internal feedback loop to enable adjusting the composition of future batches.

In a further embodiment, the scheduling subsystem may be arranged for using the selection criteria to select batches which omit, or limit in number, the devices of the second set of devices. By omitting the devices of the second set of devices from the batches, the future batches may be composed so as to maximize the chance of successful registrations. By limiting the devices of the second set of devices in number, the future batches may be composed so as to maximize the chance of successful registrations whilst still taking into account that the selection criteria may be imperfect. Said limiting may have the advantage that the selection criteria may be refined over time to again include devices which were initially and erroneously deemed to fail registration.

In a further embodiment, the monitoring subsystem may be arranged for identifying the first set of devices having failed registration based on the respective devices not successfully registering with the registration subsystem within a predetermined time window after being reconfigured. The monitoring subsystem may thus allow the devices to register with the registration subsystem within a predetermined time window after being reconfigured before deeming their registration to have failed. As such, the monitoring subsystem may take into account that the registration of reconfigured devices may require a certain amount of time and/or a certain amount of registration attempts.

In a further embodiment, the monitoring subsystem may be further arranged for:
- accessing usage records representing a usage by the group of devices of a network service; and
- identifying a further set of devices from those devices which successfully registered with the registration subsystem, said identifying being based on the usage records showing no usage of the network service within a predetermined observation period after being reconfigured; and
- generating customer care data for identifying the further set of devices to a customer care system.

The above embodiment takes into account that, in case the registration subsystem is associated with a network service, a successful registration of a reconfigured device with the registration subsystem may not automatically imply that the device is able to utilize the network service. Accordingly, the purpose of the service event may not be fulfilled. A reason for this may be that the reconfiguration may be incomplete in that it allows registration with the registration subsystem but not utilization of the network service. Another reason may be that the service event may comprise reconfiguration of the network or its components in addition to said reconfiguration of the devices, with the former being incomplete. The above measures take into account the actual use of the network service by the reconfigured devices, namely by accessing and analyzing usage records such as, e.g., call detail records in case of a Voice over Internet Protocol (VoIP) service or video access records in case of a Video on Demand (VoD) service. Accordingly, the monitoring subsystem may be enabled to generate customer care data which may be subsequently used to automatically or manually restore the ability of the devices to utilize the network service.

In a further embodiment, the service event may be a migration of the group of devices from a source network platform to a target network platform, or an upgrade of the devices of said group. The migration and upgrade constitute two examples of types of service events in which the present system is of particular use.

In a further aspect of the present invention, the system may comprise the reconfiguration subsystem. In a further aspect of the present invention, the control software may be embodied on a machine or computer readable medium.

In summary, the present invention may provide a system for scheduling a service event in a network. The system may comprise a scheduling subsystem for scheduling the service event by selecting devices from a group, a monitoring subsystem for identifying those devices which did not successfully register with a registration subsystem of the network, and an analysis subsystem for determining selection criteria for identifying further devices which are expected to fail registration based on said devices having failed registration. By providing the selection criteria to the scheduling subsystem, the scheduling subsystem is enabled to adjust the scheduling based on the selection criteria, e.g., to avoid selecting the further devices in a further scheduling.

It will be appreciated by those skilled in the art that two or more of the above-mentioned embodiments, implementations, and/or aspects of the invention may be combined in any way deemed useful.

Modifications and variations of the method and/or the control software, which correspond to the described modifications and variations of the system, can be carried out by a person skilled in the art on the basis of the present description.

The invention is defined in the independent claims. Advantageous yet optional embodiments are defined in the dependent claims.

### BRIEF DESCRIPTION OF THE DRAWINGS

These and other aspects of the invention are apparent from and will be elucidated with reference to the embodiments described hereinafter. In the drawings,
Fig. 1 shows a system for scheduling a service event in a network and a reconfiguration subsystem for carrying out the service event according to the scheduling;
Fig. 2 illustrates the carrying out of the service event when the service event is a migration of devices from a source network platform to a target network platform;
Fig. 3 shows a message exchange between the system and the reconfiguration subsystem to schedule the service event in the network;
Fig. 4 shows a method for scheduling the service event in the network; and
Fig. 5 shows a computer readable medium comprising control software for executing the steps of the method on network equipment;

It should be noted that items which have the same reference numbers in different Figures, have the same structural features and the same functions, or are the same signals. Where the function and/or structure of such an item has been explained, there is no necessity for repeated explanation thereof in the detailed description

### DETAILED DESCRIPTION OF EMBODIMENTS

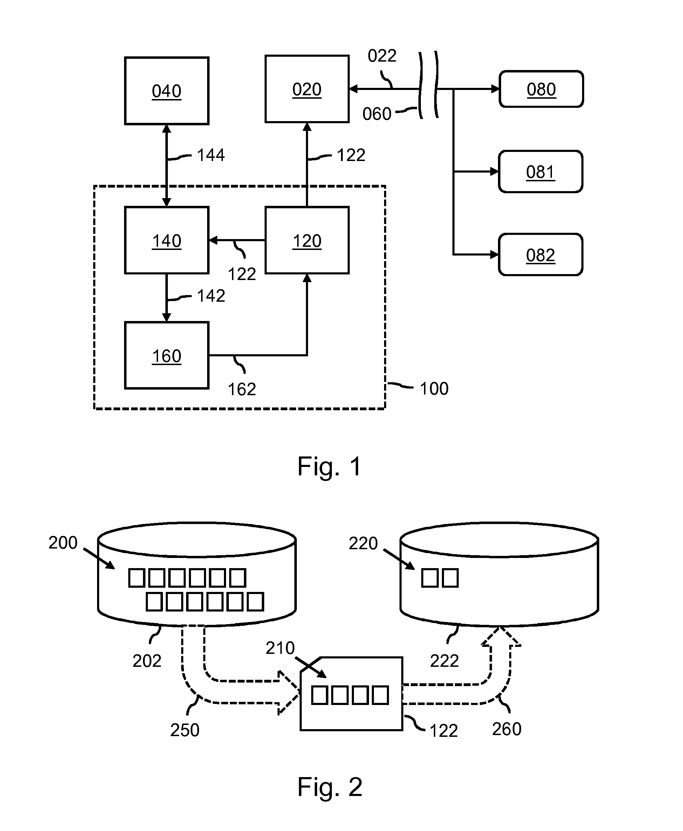

Fig. 1 shows system 100 for scheduling a service event in a network. The service event may involve, e.g., a migration within the network of a group of devices from a source network platform to a target network platform, an upgrade of devices of a group of individual users, or any other type of service event which comprises reconfiguring devices 080-082 using a reconfiguration subsystem 020. Fig. 1 shows the devices 080-082 being connected to the network and the reconfiguration subsystem 020 therein via an access network 060. Examples of such access networks 060 include wired access networks such as Digital Subscriber Line (DSL) and Fiber-optic access networks and wireless access networks such as a Universal Mobile Telecommunications System (UMTS) access network. Each of the devices 080-082 may be constituted by, e.g., a modem, a cable box, a set-top box, a mobile phone, a tablet, a 'smart' home appliance, a sensor, etc. By way of example, Fig. 1 shows three devices 080-082 connected to the network. It will be appreciated, however, that in practice the service event may be applied to a larger group of devices and thus involves the reconfiguration of a larger group of devices. For example, in case of a migration, the group to be migrated may comprise tens or hundreds of thousands of individual devices.

In carrying out the service event, the reconfiguring of a device 080 is deemed successful if the device 080 is able to register with a registration subsystem after being reconfigured by the reconfiguration subsystem 020. Conversely, if the device 080 is unable to register with the registration subsystem after being reconfigured, the reconfiguring of the device 080 is deemed not to be successfully carried out.

Fig. 1 shows the system 100 comprising a scheduling subsystem 120 for scheduling the service event. In particular, the scheduling subsystem 120 may be arranged for scheduling the service event by selecting devices from the group and by providing scheduling data 122 identifying said selected devices to the reconfiguration subsystem 020. For example, the scheduling subsystem 120 may sequentially select batches of devices from the group, i.e., in a batch-wise manner. Accordingly, the reconfiguration subsystem 020 may reconfigure the devices of the entire group by, via an exchange of messages 022, first reconfiguring the devices from a first batch, then reconfiguring the devices from a second batch, etc.

In order to select and identify the devices, the scheduling subsystem 120 may make use of data which identifies the entire group of devices. For example, such data may identify all devices of the group by listing their public identifiers within the network. The scheduling subsystem 120 may then generate the scheduling data 122 by sequentially listing batches of public identifiers. The reconfiguration subsystem 020 may then use the public identifiers to address the respective devices so as to effect their reconfiguration. It will be appreciated, however, that many alternatives exist and can be devised by person skilled in the art to the above mechanism of identifying devices to the reconfiguration subsystem 020 for causing the reconfiguration subsystem 020 to effect the reconfiguration of the devices.

Fig. 1 further shows the system 100 comprising a monitoring subsystem 140 for, based on the scheduling data 122, determining whether respective ones of the selected devices registered with the registration subsystem. In the example of Fig. 1, the monitoring subsystem 140 is shown to communicate via an exchange of messages 144 with the registration subsystem 040 which registers the registration of the devices. For example, within the context of an IP Multimedia Subsystem (IMS) of a communications network, the registration subsystem 040 may be constituted by either or a combination of the following network entities, namely the Proxy-CSCF being the ingress/egress point of the IMS platform which may be allocated to a (client) device for registration, the Serving-SCCF being the serving element in the IMS Core that executes the service request based on the service profile received from the Home Subscriber Server (HSS), and the HSS storing the IMS service profile of each individual user including the allocated P-CSCF and S-CSCF for the active registered (client) device and which may be updated whenever there is change of the profile and registrations. The registration subsystem 040 may be part of a network platform.

It will be appreciated, however, that various other mechanisms may be employed by the monitoring subsystem 140 to determine whether respective ones of the selected devices registered with the registration subsystem 040. For example, the monitoring subsystem 140 may obtain such feedback from other entities within the network or from the devices themselves.

The monitoring subsystem 140 may subsequently generate monitoring data 142 identifying those devices of the selected devices which did not successfully register with the registration subsystem 040. As such, a first set of devices may be identified which have failed registration. The monitoring subsystem 140 may identify said devices by, e.g., listing their public identifiers or by any other means. The monitoring subsystem 140 may employ a predetermined time window in identifying the first set of devices having failed registration. In particular, the monitoring subsystem 140 may only identify those devices which did not successfully register with the registration subsystem 040 within the predetermined time window. The predetermined time window for a particular device may start at a time when the reconfiguration subsystem 020 reconfigures the device. Alternatively, the predetermined time window may start at an estimated time of being reconfigured. Said estimated time may be based on, e.g., a time when the scheduling subsystem 120 identifies a particular device to the reconfiguration subsystem 020 for effecting its reconfiguration.

Fig. 1 further shows the system 100 comprising an analysis subsystem 160 for analyzing the monitoring data 142 obtained from the monitoring subsystem 140 to obtain selection criteria for identifying a second set of devices which are expected to fail registration based on the first set of devices having failed registration. It will be appreciated that, conversely, the selection criteria thus also allow identifying those devices from the group which are expected to succeed registration. For obtaining the selection criteria, the analysis subsystem 160 may employ various techniques. For example, the analysis subsystem 160 may apply a statistical analysis technique to the monitoring data 142. The analysis subsystem 160 may subsequently provide the selection criteria 162 to the scheduling subsystem 120. Accordingly, the scheduling subsystem 120 is enabled to adjust the scheduling based on the selection criteria 162. For example, the scheduling subsystem 120 may omit further scheduling devices from the second set of devices.

An operation of the system 100 may be briefly explained as follows. The scheduling subsystem 120 may initiate the scheduling of the service event by sequentially selecting devices from the group and providing scheduling data 122 identifying said selected devices to the reconfiguration subsystem 020. The monitoring subsystem 140 may then determine whether the selected devices successfully registered with the registration subsystem 040 after being reconfigured, and generate the monitoring data 142 identifying those devices of the selected devices which did not successfully register with the registration subsystem. The monitoring data 142 may thereby identify a first set of devices having failed registration. The analysis subsystem 160 may then analyze the monitoring data 142 to obtain the selection criteria 162 for identifying the second set of devices which are expected to fail registration based on the first set of devices having failed registration and provide the selection criteria 162 to the scheduling subsystem 120. In response, the scheduling subsystem 120 may adjust the scheduling of the service event based on the selection criteria, e.g., by omitting in the further scheduling those devices from the second set of devices.

Fig. 2 illustrates the carrying out of the service event when the service event is a migration of devices from a source network platform to a target network platform. In particular, Fig. 2 shows the devices being migrated in a batch-wise manner. In Fig. 2, the devices are represented by squares which may be placed in a source database 202 or a target database 222. A placement in the source database 202 symbolizes the respective individual devices having not been migrated yet to the target network platform, thereby forming a group of remaining devices 200. Conversely, a placement in the target database 222 symbolizes the respective devices having already been migrated to the target platform, thereby forming a group of migrated devices 220. Here, the migrated devices 220 are deemed to have successfully registered with a registration subsystem of the target network platform. In Fig. 2, the selection of a batch 210 of devices is symbolized by a first arrow 250.

As a result of said selection, selection data 122 is obtained which identifies the batch 210 of selected devices. In Fig. 2, the contents of the selection data 122, i.e., the selection itself, is shown in the form of a data record which comprises the squares of the selected devices 210. Moreover, in Fig. 2, the reconfiguring of the selected devices 210 is symbolized by a second arrow 260. Accordingly, after the selected devices 210 have been successfully reconfigured, the selected devices from the batch 210 are considered to have been successfully migrated.

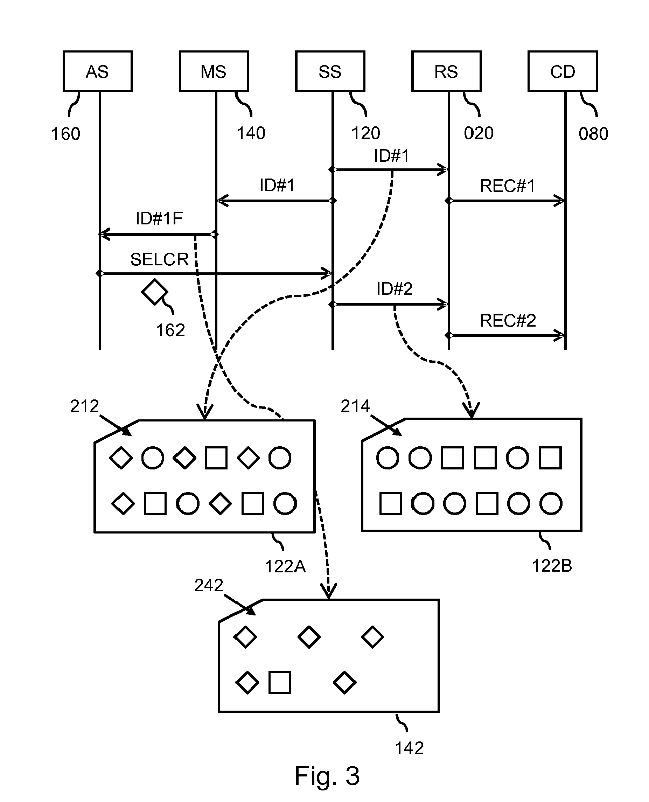

Fig. 3 shows a possible message exchange to schedule the service event in the network. Here, each subsystem of the system, device and other network entity is indicated in Fig. 3 by means of their abbreviation, namely, from left to right, AS for the analysis subsystem 160, MS for the monitoring subsystem 140, SS for the scheduling subsystem 120, RS for the reconfiguration subsystem 020 and CD for one of the (client) devices 080. The vertical axis corresponds to time. The message exchange may be as follows.

The scheduling subsystem SS may initiate the scheduling of the service event by selecting a first batch of devices 212 from a group of devices. The scheduling subsystem SS may subsequently provide scheduling data 122A identifying said batch of devices to the reconfiguration subsystem RS in a message titled "ID#1".

In Fig. 3, the contents of the selection data 122A, i.e., the selection of the batch of devices, is shown in the form of a data record which comprises different symbols denoting the selected devices 212. The different symbols, being a diamond-shape, a circle or a square, may denote different characteristics of the devices or differences in information associated with the devices. For example, said differences may refer to a type of subscription of the device, e.g., including or not including high-speed Internet access, which may be evident from subscription data stored in the network. The different characteristics of the devices may be constituted by differences in the type of the devices, differences in the version of software running on the devices, differences in the location of the devices, differences in the subscription information associated with the devices, differences in the type of connectivity of the devices with the network, etc. For sake of simplicity, Fig. 3 deals with three different types of devices and/or differences in the information associated with the devices. It is noted that in the following, unless explicitly indicated, a reference to different devices is to be understood as including differences existing in information which is associated with the devices, such as the location information, subscription information, etc.

In response to the selection data 122A, the reconfiguration subsystem RS may effect the reconfiguration of the devices of the first batch 212. As a result, Fig. 3 shows the reconfiguration subsystem RS reconfiguring the (client) device CD via a message exchange "REC#1". At an approximately similar moment in time, the scheduling subsystem SS may provide the scheduling data 122A to the monitoring subsystem MS via a message exchange "ID#1". Based on the scheduling data 122A, the monitoring subsystem MS may determine whether respective devices of the selected devices registered with the registration subsystem and generate monitoring data 142 identifying those devices of the selected devices which did not successfully register with the registration subsystem to the analysis subsystem 160 in a message titled "ID#1F". The monitoring data 142 may thus identify a first set of devices having failed registration which is shown in Fig. 3 in the form of a data record which comprises different symbols denoting said set of devices 242. In the example of Fig. 3, the devices are shown to be nearly all of the type 'diamond-shape', with only one individual device having failed registration being of the type 'square'.

The analysis subsystem 160 may analyze the monitoring data 142 to obtain selection criteria 162 for identifying a second set of devices which are expected to fail registration based on the first set of devices having failed registration. In obtaining the selection criteria 162, the analysis subsystem 160 may make use of auxiliary data which characterizes the devices 212. Accordingly, the analysis subsystem AS may analyze the auxiliary data in conjunction with the monitoring data 142 to obtain the selection criteria 162. The analysis subsystem AS may then provide the selection criteria 162 to the scheduling subsystem SS in a message titled "SELCR" to enable the scheduling subsystem to adjust the scheduling based on the selection criteria. Fig. 3 illustratively shows the selection criteria 162 as identifying devices of the type 'diamond-shape'. In practice, this may constitute, e.g., identifying a type of device, a version of software running on the device, or any other characteristic of the device or information associated with the device.

In response to the selection criteria 162, the scheduling subsystem SS may adjust the scheduling of the service event by selecting a second batch of devices 214 from the group of devices based on the selection criteria. In particular, the scheduling subsystem SS may select the second batch 214 to omit, or limit in number, the devices of the second set of devices, i.e., being those of the type 'diamond-shape'. Fig. 3 shows a result of this, in that the second batch of devices 214 is comprised only of devices of the types 'circle' and 'square'. The scheduling subsystem SS may subsequently provide scheduling data 122B identifying said batch of devices to the reconfiguration subsystem RS in a message titled "ID#2".

It will be appreciated that the analysis subsystem may generate the selection criteria to identify the second set of devices based on one or more characteristics of the devices and/or information associated with the devices. For example, the selection criteria may be generated based on a type of device and/or a version of software running on the device. It will be appreciated, however, that numerous other characteristics of the device may be used as well, including those characteristic which define a user associated with the device. For example, the selection criteria may be based on location of the device, type of connectivity to the network, subscription information associated with the device, etc. Accordingly, the analysis subsystem may use a combination of characteristics. The analysis subsystem may also refine the selection criteria over time, e.g., by including additional characteristics to the selection criteria and/or removing existing characteristics from the selection criteria. For example, the analysis subsystem may accumulate an error count for a number of different characteristics which are associated with the devices, with the error count representing a number of devices having failed registration and exhibiting the respective characteristic. Said characteristics may be provided to the analysis subsystem in the form of auxiliary data. The analysis subsystem may then include one of the one or more characteristic in the selection criteria in response to the error count of said characteristic exceeding an error threshold. The analysis subsystem may also remove one of the characteristics from the selection criteria if the error count does not further increase, or after being reset, does not exceed the error threshold anymore.

The monitoring subsystem may further be arranged for identifying a subset of the devices which are deemed to have succeeded registration with the registration subsystem, but which are unable to make use of a network service associated with the registration subsystem. For that purpose, the analysis subsystem may access usage records representing the usage by the devices of a network service. Based on said usage records, the analysis subsystem may then identify a further set of devices from those devices which successfully registered with the network platform, i.e., a subset thereof, with said identifying being based on the usage records showing no usage of the network service within a predetermined observation period after being reconfigured. Finally, having identified the further set of devices, the analysis subsystem may generate customer care data to identify the further set of devices to a customer care system.

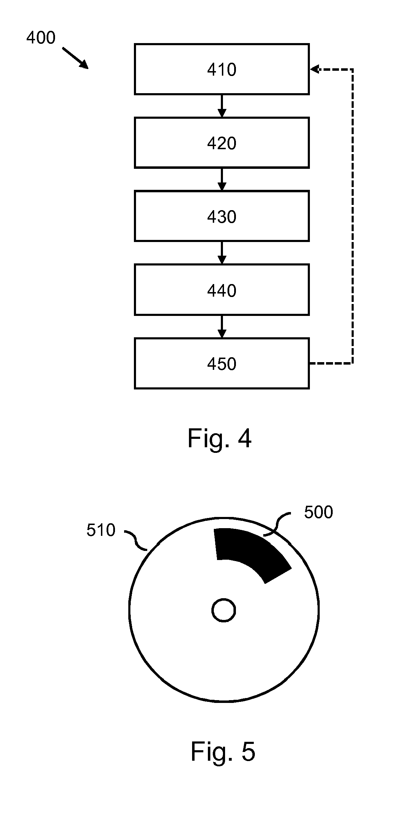

Fig. 4 shows a method 400 for scheduling a service event in a network. The method 400 may correspond to an operation of the system of Fig. 1. It will be appreciated, however, that the method 400 may also be performed in separation of said system.

In the method 400, a service event comprises reconfiguring a group of devices using a reconfiguration subsystem, with said reconfiguring being deemed successful if a device is able to register with a registration subsystem of the network after being reconfigured. The method 400 comprises, in a first step titled "SCHEDULING OF DEVICES", scheduling 410 the service event by selecting devices from the group and providing scheduling data identifying said selected devices to the reconfiguration subsystem. The method 400 further comprises, in a second step titled "DETERMINING SUCCESSFUL REGISTRATION OF DEVICES", based on the scheduling data, determining 420 whether the selected devices successfully registered with the registration subsystem. The method 400 further comprises, in a third step titled "IDENTIFYING NON-REGISTERING DEVICES", generating 430 monitoring data identifying those devices of the selected devices which did not successfully register with the registration subsystem, thereby identifying a first set of devices having failed registration. The method 400 further comprises, in a fourth step titled "OBTAINING SELECTION CRITERIA", analyzing 440 the monitoring data to obtain selection criteria for identifying a second set of devices which are expected to fail registration based on the first set of devices having failed registration. The method 400 further comprises, in a fifth step titled "ADJUSTING SCHEDULING BASED ON SELECTION CRITERIA", adjusting 450 the scheduling of the service event based on the selection criteria.

It will be appreciated that the method 400 may be performed in an iterative manner, in that after performing the fifth step of adjusting 450 the scheduling of the service event, the first step 410 may be performed, namely by sequentially selecting further devices from the group based on the selection criteria and providing scheduling data identifying said selected further devices to the reconfiguration subsystem.

Fig. 5 illustratively shows control software 510 comprising instructions for executing the steps of the method of Fig. 4 on network equipment of the network. The control software 510 may be comprised on a computer readable medium 500, for example in the form of as a series of machine readable physical marks and/or as a series of elements having different electrical, e.g., magnetic, or optical properties or values.

It will be appreciated that the present invention may be used to incorporate a feedback loop in the scheduling of the service event. As such, the above described adjusting of the scheduling may be repeated multiple times while carrying out the service event. Effectively, the present invention provides a self-learning scheduling system which is enabled to learn which devices fail registration during the service event and thus fail the purpose of the service event, being, e.g., a migration or upgrade. The present invention may be advantageously used to carry-out software upgrades, extension of configurations with additional parameters (e.g. to support new service features), enabling functions for new network services (e.g. up-selling), recovering devices that are malfunction after an unplanned event (e.g. network outage), etc, for a group of devices. The present invention may be advantageously used to schedule the service event for end-user devices such as mobile phones and tablets, 'smart' home appliances such as fridges and electricity meters and various other types of devices which may be connected to the network.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. Accordingly, said article is understood as referring to "one or more" elements and vice versa. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (100) for scheduling a service event in a network, the service event comprising reconfiguring a group of devices (080-082, 200) using a reconfiguration subsystem (020), said reconfiguring being deemed successful if a device is able to register with a registration subsystem of the network after being reconfigured, and the system comprising:
- a scheduling subsystem (120) for scheduling the service event by selecting devices (210-214) from the group and providing scheduling data (122) identifying said selected devices to the reconfiguration subsystem;
- a monitoring subsystem (140) for:
- based on the scheduling data, determining whether the selected devices successfully registered with the registration subsystem, and
- generating monitoring data (142) identifying those devices of the selected devices which did not successfully register with the registration subsystem, thereby identifying a first set of devices having failed registration; and
- an analysis subsystem (160) arranged for:
- analyzing the monitoring data to obtain selection criteria (162) for identifying a second set of devices which are expected to fail registration based on the first set of devices having failed registration; and
- providing the selection criteria (162) to the scheduling subsystem for enabling the scheduling subsystem to adjust the scheduling based on the selection criteria.

2. The system (100) according to claim 1, wherein the scheduling subsystem (120) is arranged for using the selection criteria (162) to omit selecting the devices from the second set of devices .

3. The system (100) according to claim 1 or 2, wherein the system is arranged for accessing auxiliary data characterizing the devices (080-082, 200) of the group, and wherein the analysis subsystem (160) is arranged for analyzing the auxiliary data in combination with the monitoring data (142) to obtain the selection criteria (162).

4. The system (100) according to claim 3, wherein the analysis subsystem (160) is arranged for generating the selection criteria (162) to identify the second set of devices based on one or more characteristics of the respective devices.

5. The system (100) according to claim 4, wherein the selection criteria (162) are based on at least one of the group of:
- a type of a device;
- a version of software running on the device;
- location information indicative of a location of the device;
- subscription information associated with the device; and
- a type of connectivity of the device with the network.

6. The system (100) according to claim 4 or 5, wherein the analysis subsystem (160) is further arranged for:
- accumulating an error count for each of the one or more characteristics, the error count representing a number of devices (080-082, 200) which have failed registration and which exhibit the respective characteristic; and
- including one of the one or more characteristic in the selection criteria (162) in response to the error count of said characteristic exceeding an error threshold.

7. The system (100) according to any one of claims 3 to 6, wherein the analysis subsystem (160) is arranged for obtaining the selection criteria (162) by applying a statistical analysis technique to the auxiliary data in combination with the monitoring data (142).

8. The system (100) according to any one of the above claims, wherein the scheduling subsystem (120) is arranged for scheduling the service event by selecting batches (210-214) of devices from the group (200) and providing scheduling data (122) identifying the batches of devices to the reconfiguration subsystem (020).

9. The system (100) according to claim 8, wherein the scheduling subsystem (120) is arranged for using the selection criteria (162) to select batches (210-214) which omit, or limit in number, the devices of the second set of devices.

10. The system (100) according to any one of the above claims, wherein the monitoring subsystem (140) is arranged for identifying the first set of devices having failed registration based on the respective devices not successfully registering with the registration subsystem within a predetermined time window after being reconfigured.

11. The system (100) according to any one of the above claims, wherein the monitoring subsystem (140) is further arranged for:
- accessing usage records representing a usage by the group of devices (080-082, 200) of a network service; and
- identifying a further set of devices from those devices which successfully registered with the registration subsystem, said identifying being based on the usage records showing no usage of the network service within a predetermined observation period after being reconfigured; and
- generating customer care data for identifying the further set of devices to a customer care system.

12. The system (100) according to any one of the above claims, wherein the service event is a migration of the group of devices (080-082, 200) from a source network platform to a target network platform, or an upgrade of the devices of said group.

13. Network comprising the system according to any one of the above claims.

14. Method (400) for scheduling a service event in a network, the service event comprising reconfiguring a group of devices using a reconfiguration subsystem, said reconfiguring being deemed successful if a device is able to register with a registration subsystem of the network after being reconfigured, and the method comprising:
- scheduling (410) the service event by selecting devices from the group and providing scheduling data identifying said selected devices to the reconfiguration subsystem;
- based on the scheduling data, determining (420) whether the selected devices successfully registered with the registration subsystem;
- generating (430) monitoring data identifying those devices of the selected devices which did not successfully register with the registration subsystem, thereby identifying a first set of devices having failed registration;
- analyzing (440) the monitoring data to obtain selection criteria for identifying a second set of devices which are expected to fail registration based on the first set of devices having failed registration; and
- adjusting (450) the scheduling of the service event based on the selection criteria.

15. Control software (500) comprising instructions for execution on network equipment of a network, the instructions being operative for causing the network equipment to perform the steps of the method according to claim 14.
